# EUROPÄISCHE PATENTANMELDUNG

(11) **EP 0 759 673 A2**
(43) Veröffentlichungstag der Anmeldung: **26.02.1997**
(21) Anmeldenummer: 96113271.9
(22) Anmeldetag: 19.08.1996
(51) Int. Cl.: H04M 11/06

(54) **Teilnehmerendstelle**

(30) Priorität: 21.08.1995 DE 19530678
(71) Anmelder: SIEMENS AKTIENGESELLSCHAFT, 80333 München (DE)
(72) Erfinder: Frenzel, Rudi, Dr.-Ing., 81735 München (DE); Zwick, Thomas, 80809 München (DE); Höfer, Gerald, 86853 Langerringen (DE)

(57) **Zusammenfassung**

Teilnehmerendstelle mit einer Datensenke und/oder Datenquelle (11), die unter Zwischenschaltung einer Datenaufbereitungseinrichtung (9, 10) über eine digitale Verbindungseinrichtung (3) an ein Kommunikationsnetz (2) angeschlossen ist, mit einer Erkennungseinrichtung (12), die mit einer Gegenstelle im Kommunikationsnetz kommuniziert und dabei erkennt, ob es sich um eine durchwegs digitale oder teilweise analoge Verbindung zur Gegenstelle handelt, und mit einer Bypasseinrichtung (13), die der Datenaufbereitungseinrichtung (9, 10) parallel geschaltet ist und die durch die Erkennungseinrichtung (12) bei erkannter durchwegs digitaler Verbindung aktiviert wird.

## Beschreibung

Die Erfindung betrifft eine Teilnehmerendstelle mit einer Datensenke und/oder Datenquelle, die unter Zwischenschaltung einer Datenaufbereitungseinrichtung über eine digitale Verbindungseinrichtung an ein Kommunikationsnetz angeschlossen ist.

Bei gebräuchlichen Kommunikationssystemen kann nur eine analoge Sprachverbindung oder eine Datenverbindung für digitale Übertragungsanwendungen von Teilnehmerendstellen angefordert werden. Durch die fortschreitende Digitalisierung der Kommunikationsnetze wird in zunehmendem Maße bei Sprachanwendungen ebenfalls ein digitaler Übertragungskanal verwendet. In diesem Fall wird die zur Verfügung stehende Übertragungsbandbreite nicht in vollem Umfang genutzt.

Aufgabe der Erfindung ist es, eine Teilnehmerendstelle bereitszustellen, die diese Nachteile nicht aufweist.

Die Aufgabe wird bei einer Teilnehmerendstelle der eingangs genannten Art durch die kennzeichnenden Merkmale des Patentanspruchs 1 gelöst. Weiterbildungen des Erfindungsgedankens sind Gegenstand von Unteransprüchen.

Die Erfindung sieht vor eine Erkennung einer digitalen Verbindung zwischen zwei Endgeräten über ein beispielsweise öffentliches Kommunikationsnetz innerhalb des gemeinsamen Verbindungskanals (In-Band) und eine darauf basierende Umgehung der die Übertragungsrate einschränkenden Datenaufbereitungseinrichtung durch direktes Aufschalten der Datenquelle/-senke auf das Kommunikationsnetz. Bei einer Weiterbildung der Erfindung erfolgt zudem die Einstellung von Übertragungsparametern der Datenquellen/-senken anhand daraus gewonnener weiterer Informationen.

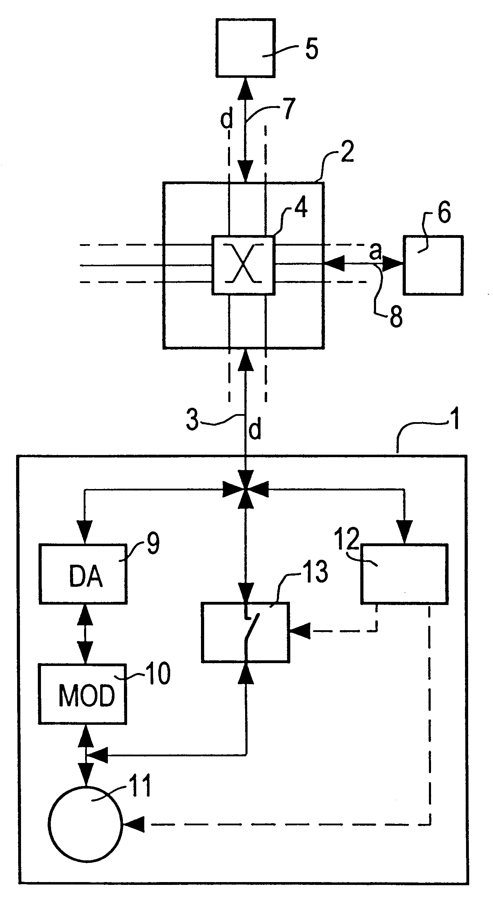

Die Erfindung wird nachfolgend anhand des in der einzigen Figur der Zeichnung dargestellten Ausführungsbeispiels näher erläutert.

Danach ist eine erfindungsgemäße Teilnehmerendstelle 1 über ein digitales Verbindungsstück 3 an ein Kommunikationsnetz 2, beispielsweise ein öffentliches Fernsprechnetz, angeschlossen. Das Kommunikationsnetz 2 umfaßt eine Vermittlungseinrichtung 4, an die über jeweils eine weitere Verbindung weitere Teilnehmerendstellen angeschlossen sind. Der Übersicht halber seien beispielhaft nur zwei Teilnehmerendstellen 5 und 6 herausgegriffen, wobei die Teilnehmerendstelle 5 über ein digitales Verbindungsstück 7 und die Teilnehmerendstelle 6 über ein analoges Verbindungsstück 8 mit der Vermittlungseinheit 4 gekoppelt ist. Bei der Teilnehmerendstelle 6 kann es sich beispielsweise um eine analoge Fernsprecheinrichtung handeln. Die Teilnehmerendstelle 5 kann identisch zur erfindungsgemäßen Teilnehmerendstelle 1 aufgebaut sein oder durch eine andere entsprechend vorbereitete digitale Teilnehmerendstelle gegeben sein. Die weiteren, in der Zeichnung nicht dargestellten Teilnehmerendstellen können in beliebiger Weise analog oder digital ausgeführt sein.

Die erfindungsgemäße Teilnehmerendstelle 1 enthält eine bidirektionale Digital-Analog-Umsetzeinrichtung 9, die analoge Sendesignale in digitale Sendesignale zur Übertragung an die Vermittlungseinrichtung 4 und von dort weiter an die jeweilige Gegenstelle - beispielsweise die Teilnehmerendstellen 5 oder 6 - und die umgekehrt digitale Empfangssignale von der Gegenstelle in analoge Empfangssignle umwandelt. Auf analoger Seite steht die bidirektionale Digital-Analog-Umsetzeinrichtung 9 mit einer Modulations-/Demodulationseinrichtung 10 in Verbindung, die Signale von einer kombinierten digitalen Datenquelle-/senke 11 das analoge Sendesignal bildend moduliert und analoge Empfangssignale von der Modulations-/Demodulationseinrichtung 9 erhaltene analoge Empfangssignale zur Weiterleitung an die Datenquelle-/senke 11 demoduliert.

Weiterhin ist eine Erkennungseinrichtung 12 vorgesehen, die prüft, ob eine durchwegs digitale Verbindung zur Gegenstelle vorhanden ist. Dazu werden Testmuster mit der Gegenstelle ausgetauscht. Werden die von der Gegenstelle gesandten Testmuster nicht oder nicht richtig erkannt, so wird eine analoge Verbindung unterstellt. In diesem Fall erfolgt die Übertragung in gewohnter Weise über die Modulations-/Demodulationseinrichtung 10 und die bidirektionale Digital-Analog-Umsetzeinrichtung 9. Wird dagegen eine digitale Verbindung festgestellt, so wird eine Bypasseinrichtung 13 aktiviert, die eine direkte Verbindung zwischen dem digitalen Verbindungsstück 3 und der Datenquelle-/senke 11 herstellt. Die Bypasseinrichtung 13 ist folglich einer durch die Modulations-/Demodulationseinrichtung 10 und die bidirektionale Digital-Analog-Umsetzeinrichtung 9 gebildeten Datenaufbereitungseinrichtung parallel geschaltet und wird durch die Erkennungseinrichtung 12 gesteuert. Während der Datenübertragung bei durchwegs digitaler Verbindung sorgt sie dafür, daß die Datenaufbereitungseinrichtung inaktiv ist. Die Daten werden in dem Fall transparent oder invertiert an die Datenquelle/-senke 11 weitergegeben.

Die Erfindung weiterbildend ist die Erkennungseinrichtung 12 derart ausgelegt, daß sie, nachdem eine digitale Verbindung erkannt worden ist, auch die maximale Übertragungsrate anhand definierter Bitmuster prüft und aufgrund des Ergebnisses der Prüfung die Übertragungsrate der Datenquelle-/senke 11 entsprechend einstellt. Dadurch wird die jeweilige Verbindung optimal genutzt.

Nachfolgend wird beispielhaft die Anwendung der Erfindung bei einem ISDN-Basisanschluß näher erläutert.

Zunächst wird über einen Signalisierungskanal (D-Kanal) eine Sprachverbindung aufgebaut. Nachdem die Verbindung zwischen zwei Teilnehmerendstellen durchgeschaltet ist, beginnt die Überprüfung der Verbindung. Die gerufene Teilnehmerendstelle sendet für eine bestimmte Zeitdauer ein erstes Testmuster. Dieses Testmuster wird abhängig von der jeweiligen Verbindung bei der rufenden Teilnehmerendstelle mit bekannten Werten verglichen. Gleichzeitig prüft die rufende Teilnehmerendstelle, ob ein Antwortssignal der eigenenModulations-Demodulationseinrichtung festgestellt wird. Als erstes Testmuster wird beispielsweise das Binärwort 01111110 verwendet, wobei als Ergebnismuster beispielsweise 01111110, 0111111x, 0101000x oder 0101010x erwartet wird. Dabei steht 0 für einen logischen Zustand, 1 für den anderen logischen Zustand und x für einen beliebigen Zustand.

Wurde ein gültiges Ergebnismuster erkannt, so beginnt die rufende Teilnehmerendstelle mit dem Senden eines zweiten Testmusters, beispielsweise einem Dauerflag. Dabei ist ebenso wie beim Senden des ersten Testmusters eine Zeitüberwachung aktiv, um nach Ablauf einer vorgegebenen Zeit ohne gesendetem Ergebnismuster von einer zum Teil analogen Verbindung auszugehen. Die gerufene Teilnehmerendstelle überprüft das aus dem zweiten Testmuster hervorgehende Ergebnismuster und leitet daraus die maximale Übertragungsrate sowie die damit verbundenen Einstellungen der Datenquelle her. Nachdem auch die rufende Teilnehmerendstelle das zweite Testmuster erkannt hat, tauschen beide Teilnehmerendstellen eine bestimmte Bitkombination, die die ermittelten Kanalparameter in kodierter Form enthält, aus. Nach korrekt erfolgter Übertragung und bei beidseitig verifizierten und übereinstimmenden Ergebnissen bezüglich des Übertragungskanals schalten beide Teilnehmerendstellen nach einer gewissen Zeit, beispielsweise 25 ms, die Bypasseinrichtung transparent. Das Transparentschalten kann dabei für Sende- und Empfangssignal gleichzeitig oder zeitlich versetzt zueinander, abhängig oder unabhängig voneinander erfolgen. Die Bypasseinrichtung empfängt die Daten die für die Modulationseinrichtung gedacht sind und gibt sie transparent weiter. In der Regel erfolgt eine Überprüfung der Möglichkeit zur Übertragung mit Fehlerkorrekturverfahren und ggf. mit Datenkompression. Bei der Übertragungsrate von 64 kbit/s erfolgt die Übertragung beispielsweise nur mit 7 Bit Breite. Wurde eine auf dem HDLC-Protokoll basierende Fehlerkorrektur erkannt, so wird auf die Übertragung mit 8 Bit Breite umgeschaltet, wobei der HDLC-Bitstrom invertiert übertragen wird.

Neben dem hier gezeigten Ausführungsbeispiel können aber in gleicher Weise auch andere Protokolle bei der Datenübertragung, andere Kommunikationsnetze, getrennte Datensenken und Datenquellen, getrennte Modulatoren und Demodulatoren sowie getrennte Digital-Analog-Umsetzeinrichtungen und Analog-Digital-Umsetzeinrichtungen in gleicher Weise verwendet werden. Als Datenquellen bzw. Datensenken kommen dabei neben Fernsprechgeräten auch Faxgeräte, Datenterminals, Bildtelefone sowie alle sonstigen Vorrichtungen, die Daten aufnehmen bzw. abgeben, in Frage.

## Patentansprüche

1. Teilnehmerendstelle
mit einer Datensenke und/oder Datenquelle (11), die unter Zwischenschaltung einer Datenaufbereitungseinrichtung (9, 10) über ein digitales Verbindungsstück (3) an ein Kommunikationsnetz (2) angeschlossen ist,
**gekennzeichnet durch**
eine Erkennungseinrichtung (12), die mit einer Gegenstelle im Kommunikationsnetz kommuniziert und dabei erkennt, ob es sich um eine durchwegs digitale oder teilweise analoge Verbindung zur Gegenstelle handelt, und durch eine Bypasseinrichtung (13), die der Datenaufbereitungseinrichtung (9, 10) parallel geschaltet ist und die durch die Erkennungseinrichtung (12) bei erkannter durchwegs digitaler Verbindung (3, 4, 7) aktiviert wird.

2. Teilnehmerendstelle nach Anspruch 1,
**dadurch gekennzeichnet,**
daß die Erkennungseinrichtung (12) zudem bei der Kommunikation mit der Gegenstelle die maximal mögliche Übertragungsrate zwischen beiden ermittelt und daß anhand der maximal möglichen Übertragungsrate die Übertragungsrate der Datensenke und/oder Datenquelle (11) eingestellt wird.

3. Teilnehmerendstelle nach Anspruch 1 oder 2,
**dadurch gekennzeichnet,**
daß die Datenaufbereitungseinrichtung eine Modulations-/Demodulationseinrichtung (10), die Signale von der Datenquelle (11) ein analoges Sendesignal bildend moduliert und analoge Signale zur Weiterleitung an die Datensenke (11) demoduliert, sowie eine bidirektionale Digital-Analog-Umsetzeinrichtung (9), die analoge Sendesignale in digitale Sendesignale zur Übertragung an die Gegenstelle und digitale Empfangssignale von der Gegenstelle in analoge Empfangssignale umwandelt, aufweist.

4. Teilnehmerendstelle nach einem der Ansprüche 1 bis 3,
**dadurch gekennzeichnet,**
daß die Erkennungseinrichtung (12) zur Erkennung einer digitalen Verbindung und/oder zur Ermittlung der maximal möglichen Übertragungsrate jeweils geeignete Testmuster mit der Gegenstelle austauscht und die von der Gegenstelle erhaltenen oder nicht erhaltenen Testmuster auswertet.
